# EUROPEAN PATENT APPLICATION

(11) **EP 1 217 516 A2**
(43) Date of publication of application: **26.06.2002**
(21) Application number: 01310501.0
(22) Date of filing: 17.12.2001
(51) Int. Cl.: G06F 9/44

(54) **Wizard development kit**

(30) Priority: 20.12.2000 US 742859
(71) Applicant: GENERAL ELECTRIC COMPANY, Schenectady, NY 12345 (US)
(72) Inventor: Gorman, William Phillip, Niskayuna, New York 12309 (US); Kniffin, Bethany Bleil, Niskayuna, New York 12309 (US)
(74) Representative: Goode, Ian Roy

(57) **Abstract**

A development kit is used to provide an environment for creating, testing and deploying web-based applications (104), which is geared towards non-programmers. The development kit includes an authoring utility (102) and an application server (106). The authoring utility (102) includes tools for web application authors to design, implement, test and deploy their web-based application (104). The authors can create their applications (104) using the authoring utility (102) and then deploy the applications (104) to the application server (106). The application server (106) can interface with a web server (108) to execute the applications (104) built with the authoring utility (102). The interface of the application server (106) and the web server (108) can permit end users to access the applications (104) on the application server (106) with a web browser (110).

## Description

The present invention relates generally to a development environment for creating, testing and deploying web-based applications. More specifically, the present invention relates to a visual development environment where non-programmers can generate the application logic and user interfaces for a web-based application and then deploy that application for use on the Internet or other network.

There are many tools on the market today that permit a novice user or non-programmer to design a web page or web application for the Internet. These web page design tools or HTML editors permit a novice user to layout all the text, graphics, etc. that are to be displayed on the web page or application. The HTML editors are useful for arranging the visual look of the web page. However, if the web page or application is to have any functionality or is to operate using decision logic, the HTML editors are unable to help the novice user prepare that functionality or application decision logic.

To implement functionality or decision logic in a web page or application, the novice user also has to learn a web compatible programming language such as JavaScript. Typically, a novice user or non-programmer will have a difficult time learning a web compatible programming language to the extent necessary to be able to implement the desired functionality or decision logic in the web compatible programming language because of a steep learning curve involved with the web compatible programming language. The non-programmer may be able to use a tool to assist in generating a program written in the web compatible programming language to implement the desired functionality or decision logic.

Once the functionality or decision logic of the web page or application has been generated by the novice user, the novice user still must implement the generated functionality or decision logic to execute in conjunction with the web page or application that was designed with the HTML editor and in the proper context or environment. The transfer of the created functionality into the web page created by the HTML editor and the subsequent implementation of the functionality to be executed can also be a difficult and complicated task for the novice user because there may be certain steps and procedures that have to be completed to transfer and properly execute the functionality that are unknown or unfamiliar to the novice user. This is especially true if the novice or non-programmer is attempting to implement server-side functionality, i.e. functionality that is executed by a server computer as opposed to functionality that is executed by a client computer. To implement server-side functionality the novice user may have to learn still another programming language and become familiar with the server environment, both of which can be extremely difficult tasks for the novice user or non-programmer.

Therefore what is needed is a development environment that permits a novice user or non-programmer to create, implement and deploy both the design and visual layout of a web application and any corresponding functionality or decision logic required in the web application, including any server-side functionality, in a manner that is both easy to use and does not require the novice user to learn a programming language.

One embodiment of the present invention is directed to a system to develop web applications and execute the developed web applications on a computer network. The system includes at least one development computer used by an author to generate a web application and at least one server communicating with the at least one development computer. At least one storage device is used to store said web application generated by the author. The at least one development computer includes an authoring tool. The authoring tool includes means for visually generating both decision logic and a visual layout of the web application using a plurality of visual components. The authoring tool also includes means for transferring the plurality of visual components of the web application from the at least one development computer to the at least one storage device. The at least one server includes means for providing access to the web application stored in the at least one storage device to users on a computer network. The at least one server having means for directly executing the plurality of visual components of the web application in response to a request from a user on the computer network for access to the web application.

Another embodiment of the present invention is directed to a method for developing web applications and executing the developed web applications on a computer network. The first step of the method involves visually generating both decision logic for a web application and a visual layout for the web application on a development computer using a plurality of visual components. The plurality of visual components includes at least one visual component to accomplish a particular function in a web application, at least one visual component to arrange the visual layout of a web application, and at least one visual component to link together other visual components of the plurality of visual components. The next step of the method involves transferring the plurality of visual components of the web application to at least one server accessible by users on a computer network. The final step of the method involves executing sequentially the plurality of visual components of the web application in response to a request of a user on the computer network for the web application.

One advantage of the present invention is that it enables quicker and less costly development and deployment of web-based applications by hiding complexities of web application design.

Another advantage of the present invention is that it allows non-programmers to implement web applications, including ones utilizing server-side functionality, without learning or using programming languages by providing a simple programming model and visual editors for designing the logic of their application.

Still another advantage of the present invention is that it combines a visual development environment for application logic with visual editors for the user interface in one package.

Other features and advantages of the present invention will be apparent from the following more detailed description of the preferred embodiment, taken in conjunction with the accompanying drawings which illustrate, by way of example, the principles of the invention, and in which:
Figure 1 illustrates schematically the basic system of the present invention.
Figure 2 illustrates the visual development environment used in the present invention.
Figures 3-5 illustrate different types of node editors used in the present invention.
Figure 6 illustrates a server deployment window used in the present invention.
Figure 7 illustrates a web page showing the execution of a developed web-based application.

Whenever possible, the same reference numbers will be used throughout the figures to refer to the same parts.

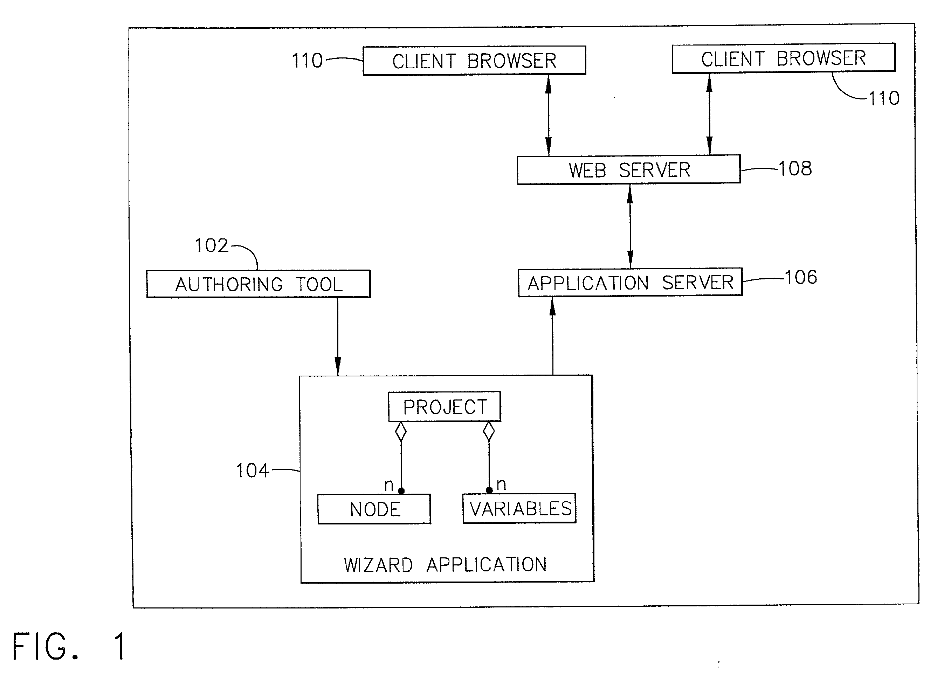

Figure 1 illustrates the basic operating arrangement of the present invention. An authoring tool 102 is used to create web-based applications 104 that are accessible by a web browser. The web-based applications 104 (also referred to as wizards or projects) that were created using the authoring tool 102 are then loaded onto an application server 106 for execution by the application server 106. In a preferred embodiment of the present invention, the authoring tool 102 and the application server 106 are preferably connected together through a computer network such as an Intranet or Extranet. The application server 106 is connected or linked to a web server 108 that makes the web-based applications or wizards 104 available and accessible on a computer network such as the Internet or an Intranet. The web server 108 is preferably using a hypertext transfer protocol daemon (HTTPd), HTTP server or other similar type of web server. Client computers with web browsers (client browsers) 110 can then access the web-based applications or wizards 104 over a computer network such as an Intranet, Extranet or the Internet by connecting or linking to web server 108. The web server 108 can then transfer any information or data received from the client browser 110 to the application server 106 for subsequent evaluation and execution by the application server 106. After the application server 106 is finished evaluating and executing in response to the information from the client browser 110, the web server 108 transfers any information or data received from the application server 106 back to the client browser 110.

In one embodiment of the present invention, the authoring tool 102, the application server 106 and the web server 108 can each be executed on its own computer. The computers for the authoring tool 102, application server 106 and web server 108 are then linked, networked or connected together to transfer data or information between the computers. In another embodiment of the present invention, the authoring tool 102, the web server 108 and the application server 106 can be combined on a single computer. In this embodiment of the present invention there is no network connection between the authoring tool 102, the web server 108 and the application server 106. The authoring tool 102, the web server 108 and the application server 106 only have to communicate information internally between one another since they are all combined on a single computer. In still another embodiment of the present invention, the web server 108 and the application server 106 can be combined on a single computer. The functions of the application server 106 such as executing web-based applications 104 can be integrated into a computer executing the web server 108. Alternatively, the functions of the web server 108 such as making the web-based applications 104 accessible over the Internet can be integrated into a computer executing the application server 106. The combination of both the web server 108 and the application server 106 on a single computer can increase the speed and responsiveness of a web-based application 104 selected by a user at the client browser 110 because there is no delay for the transfer of information between two separate servers.

As discussed above, a user or author uses the authoring tool 102 to create web-based applications 104. The authoring tool 102 is preferably a software application that is executed from an internal memory or storage device, e.g. RAM, ROM, hard disk, etc., of a computer used by the author. The authoring tool 102 can be loaded into the internal memory of the author's computer from a portable medium such as a CD-ROM, DVD-ROM, floppy disk, etc., that is inserted into the author's computer. Alternatively, the authoring tool 102 can be transferred or loaded directly into the internal memory of the author's computer through an electronic connection with another computer that has a stored copy of the authoring tool 102. In other words, the authoring tool 102 can be downloaded to the author's computer from another computer over a network connection or an Internet connection. However, the authoring tool 102 may be implemented as hardware and incorporated as part of the author's computer or workstation. In addition, the authoring tool 102 is preferably implemented as a software application for a Windows-based operating system, but the authoring tool 102 can be implemented as an application for any type of operating system, e.g. MacOS, Unix, etc., or as an application for use on either the client-side or server-side of a network such as an Extranet or the Internet.

The authoring tool 102 preferably includes a visual editing or visual development environment, a testing environment and a deployment utility. In addition, the authoring tool 102 can also include other environments, utilities and tools that are helpful and useful in developing web-based applications 104. The visual editing environment is used for the creation and modification of both the logic and structure of the web-based application 104 and the user interface and visual layout of the web-based application 104. The testing environment is used for the evaluation and debugging of the web-based application 104. Finally, the deployment utility is used for loading the completed web-based application 104 onto the application server 106 in a single action such as a mouse click.

Once the author has started the authoring tool 102 executing on a computer, the author can begin to develop a web-based application 104. The author can begin creating a new web-based application 104 or the author can resume working on a web-based application 104 that had been previously created. To create a new web-based application 104, the author starts by opening a new visual workspace for the creation of the web-based application 104. In a similar manner, the author loads a stored web-based application 104, which may or may not be completed, into a visual workspace to resume working on a web-based application 104. Tasks in the authoring tool 102, such as opening a new visual workspace, can be accomplished by selecting an appropriate menu option, selecting an appropriate button in a toolbar, entering an appropriate keyboard command or any other similar way for initiating an action on a computer.

In a preferred embodiment of the present invention, the author using the authoring tool 102 can create and generate web-based applications 104 using an architecture known as Generic Process Design (GPD). GPD is a visual programming language that is modular and easy to use. However, other similar visual programming languages can also be used in the authoring tool 102 to create web-based applications 104.

Authors can generate a web-based application 104 with GPD by interconnecting visual nodes to specify the web-based application's logic and structure. The node is the basic visual construct or component in GPD and works within both the authoring tool 102 and the application server 106 to accomplish a particular type of task that corresponds to that node. In addition, nodes can use and create variables or system values to store results of operations and share information with other nodes.

The variables or system values created and used by the nodes can be of a particular type that corresponds to the specific use or data stored in the variable or system value. In one embodiment of the present invention, there can be a general type of variable that stores a single cell of information such as a number or text segment. In addition, there can be a list type of variable that stores a list or sequence of strings separated by new line characters or other line delimiters, and a table type of variable that stores a table, spreadsheet or both rows and columns of information. However, it is to be understood that there can be any number of different types of variables or system values depending on the particular needs of the author using the authoring tool 102. Furthermore, a software developer can add additional types of variables and system values to the authoring tool 102 as needed by the authors in a manner similar to the addition of new nodes described below. The developer saves the newly created type of variable or system value in corresponding variable files for the GPD architecture that are loaded and used by both the authoring tool 102 and application server 106.

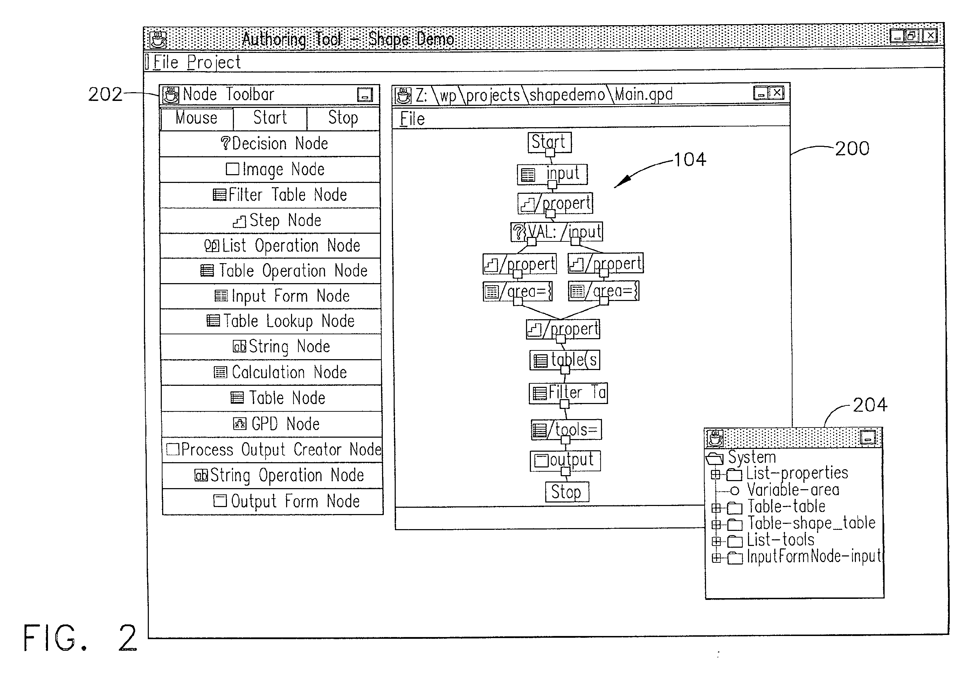

Figure 2 illustrates an example of the visual editing or visual development environment of the authoring tool 102. The visual development environment includes a node container or visual workspace 200 where the web-based application author can layout and design the web-based application 104. The author generates the web-based application 104 in the visual workspace 200 by interconnecting a series of nodes. Each node is designed to provide or accomplish a particular function or task required in the web-based application 104. The nodes are then connected together to link each of the functions or tasks of the individual nodes into a complete web-based application 104. The interconnection of nodes controls the logic and structure of the web-based application 104 in that nodes are evaluated sequentially and can cause or prevent other actions from occurring in other nodes. To create the web-based application 104, the author selects a node that corresponds to the author's desired task to be accomplished and then inserts that node into the visual workspace 200. All of the web-based applications 104 begin with a start node and end with a stop node. For example, if an author were creating a new web-based application, the author would select a start node and insert the start node into the visual workspace 200. The author would then select the next node that corresponds to the first task the author desires to accomplish and connects that node to the start node in the visual workspace 200. This process of adding nodes is repeated until the logic and structure of the web-based application 104 has been completely generated and a stop node has been inserted into the visual workspace 200. The author also has the ability to remove or delete inserted nodes or connections from the visual workspace 200 as required.

To assist the author in selecting the proper node, a window or dialog box 202 that includes a list of some or all of the available nodes for the author can be opened in the authoring tool 102. The node window 202 can include icons or entries for a plurality of different types of nodes that when selected are inserted into the visual workspace 200. For example, the node window 202 can include an input form node, a list node, a list operation node, a calculation node, a table node, a database node, a decision node, an output form node, an image node, a GPD node, a start node and a stop node.

The input form node includes the user interface for gathering input. Authors specify input parameter names and types, along with their visual layout and location on a screen using the input form node. The input form node also supports more advanced features such as simple error detection and input field relationships. The list node can append information to the end of a list. The list operation node can perform simple operations on a list such as enumeration or clearing the list. The calculation node works with input parameters and other system values to calculate a new value and store that as a system value. The table node pulls information from spreadsheets and stores it into system values. The database node pulls information from databases and stores it into system values. The decision node makes decisions based on input parameters and other system values. True and false links extend from the decision node guiding the flow of the GPD application logic. The output form node includes the user interface and visual layout information for the output. The output form node pulls information from system values and input parameters to create its output. The image node includes an image and can be integrated with the output. The GPD node provides a way of grouping part of the application logic and then referencing that logic subset at other places within the overall application logic. The GPD node preferably uses the other nodes (including other GPD nodes) to implement the application logic of the GPD node. The GPD node can also be used to implement the equivalent of program procedures. The start node identifies the start of the application logic. All GPD applications, including the main application and each GPD node, begin with a start node. The stop node identifies the completion of the application logic. All GPD applications, including the main application and each GPD node, end with a stop node.

The use of nodes as the basic component in the GPD architecture permits the GPD architecture to be modular because new nodes can be added without having to rewrite the GPD architecture. The addition and availability of new nodes into the GPD architecture is similar in operation to dynamic class loading. After a developer has created a new node that is to be made available in the GPD architecture, the developer saves the newly created node in corresponding node files for the GPD architecture that are loaded and used by both the authoring tool 102 and application server 106. Then, when an author launches the authoring tool 102 after the newly created node has been added to the node file, the node file including the newly created node is loaded by the authoring tool 102 and thus the newly created node is available to the author for inclusion in a web-based application 104. Furthermore, the application server 106 has to first load the node file with the newly created node before the application server 106 is able to execute a web-based application 104 that includes the newly created node.

To store data and transfer information between nodes in the web-based application 104, the GPD architecture provides system values or variables. The system values are incorporated into the nodes and are used to store information. Some of the information that can be stored in system values are inputs from a user and the results of calculations. To assist the author, all of the system values or variables that have been used or created are listed in a variable window 204 that permits the author to review and select from all of the variables that have been used or created. The author can then click and drop system variables from the variable window 204 into a corresponding node. In addition, the author can create his/her own system variables as determined to be necessary by the author. For example, the author may want to create a system variable that includes the result of a calculation for use with other nodes. Once a system value or variable has been created, the author can use that system variable at any place and with any node in the web-based application 104. In other words, system values or variables have no scope or visibility problems and can be used throughout the web-based application 104 and still be understood and executed by the application server 106. Furthermore, the naming scheme for system variables preferably includes a reference to the node where the system variable was originated, however, any naming scheme for the system variables can be used.

Each of the nodes is designed to accomplish a particular function or task when used in a web-based application 104. However, the particular function or task in the node is very general in nature and is not customized to the specific web-based application 104 the author is designing. Each node in the web-based application 104 created by the author can be customized or modified to apply to the specific web-based application 104. For example, a user can select an input form node to receive inputs from a user, however until the user configures the input form node, the web-based application 104 does not know how inputs will be received, what types of inputs will be entered or the visual layout of the input requests, etc. In another example, the author can select a calculation node to perform a calculation in the web-based application 104. Similar to the input form node, the calculation node will not know what calculation is to be performed until the user designates the particular calculation.

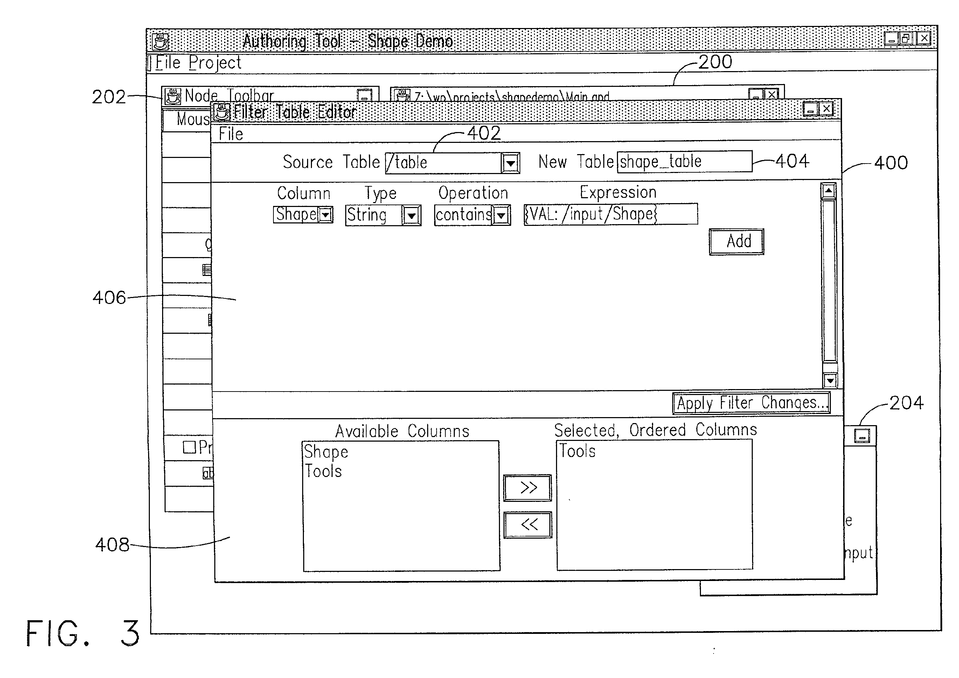

To customize or modify a specific node in the web-based application 104 being created in the visual workspace 200, the author selects that specific node from the visual workspace 200. Upon selecting the specific node to modify, a window or dialog box that includes an editor for that node is displayed that permits the author to customize and modify that node. The node editor that is displayed for customizing and modifying a specific node is designed for that specific type of node and includes the options that relate to that specific node. In other words there is not a universal node editor for all of the nodes, each of the nodes has an editor that is specifically designed to correspond to that node. The node editor for a particular node can also inform the author that certain system variables need to be assigned or created for the node to function correctly. The author using the node editor has options for saving the particular customizations created for the node for reuse at a later time and for loading in a previously created customization relating to that node. Examples of different types of node editors are shown in Figures 3-5. It is to be understood that the node editors shown in Figures 3-5 are not intended to be exhaustive of the types of node editors that can be used in the present invention and only represent a subset of the variety of different node editors that can be used in the present invention.

Figure 3 illustrates a node editor 400 for the filter table node. The filter table editor 400 can be accessed from a node. properties window that includes properties for the node. However, it is to be understood that the node editor can be accessed by different techniques. The filter table editor 400 permits the author to configure how a particular spreadsheet or table used in the web-based application 104 is filtered for use by the web-based application 104. The author is able to use the filter table editor 400 to select the source table or spreadsheet to be filtered in field 402 and to designate the name of the resulting filtered spreadsheet or table in field 404. The author can set filtering parameters for the table selected in field 402 in frame 406. In one embodiment of the present invention, the setting of filtering parameters is similar to the use of a "select" statement in SQL. Some of the filtering parameters to be set in frame 406 include a column, a data type, a filtering operation and a threshold or baseline value for the filtering operation. The baseline value for the filtering operation is normally a system variable, however, it can be a constant value or even an expression. In addition, the author can filter the source table multiple times with different filtering parameters to obtain the desired resulting table. The author can also designate the columns from the source table to include in the resulting table in frame 408. The author can include all of the columns from the source table in the resulting table or the author can include only selected columns from the source table in the resulting table.

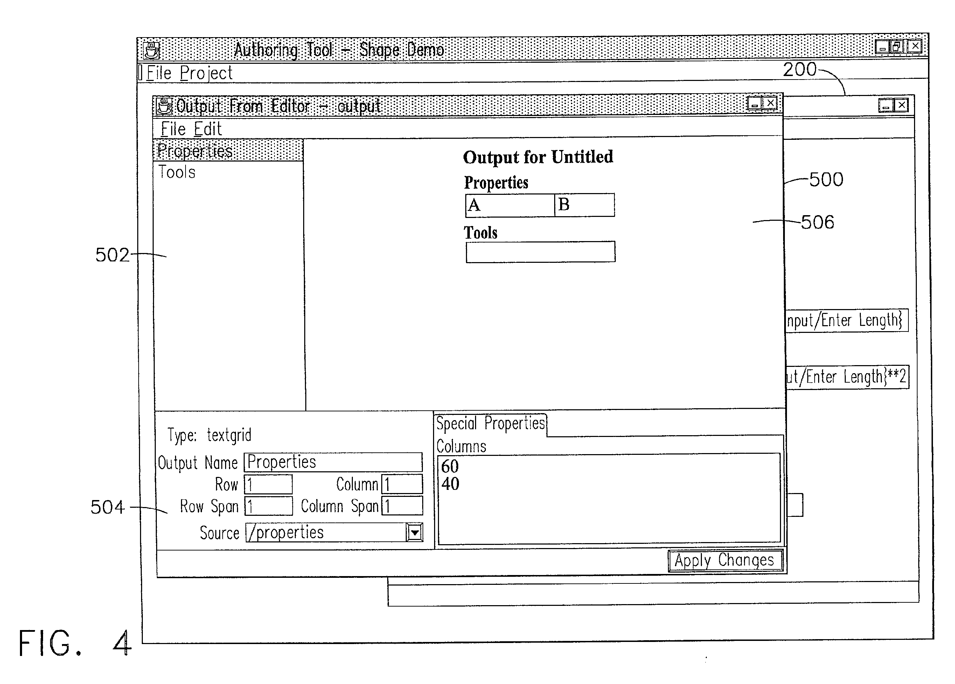

Figure 4 illustrates a node editor 500 for the output form node. The output form editor 500 is accessed in a manner similar to that for the filter table editor 400. The output form editor 500 permits the author to select the outputs, such as system variables, to be displayed to the user of the web-based application 104 and to arrange the layout of the output display for the user interface. The designated output fields to be displayed by the node are listed in frame 502. The author can create or delete a field by selecting the corresponding menu option from an edit menu. Once the author has created a new field, the author can assign some basic properties to the field such as the field's name by supplying information in a basic properties assignment area 504. In addition, the author can specify in the basic properties assignment area 504 the location for the output field (row and column) and size of the output field (row span and column span) in the user interface. The author also has to enter in the basic properties assignment area 504 the source of the output field to be displayed. Typically, the source of the output field is a system variable chosen from the system variables in the variable window 204. Using a special properties feature of the output form editor 500 the author can assign additional properties to an output field. Another feature of the output form editor 500 is that there is a preview frame 506 that permits the author to preview the output form or user interface being developed.

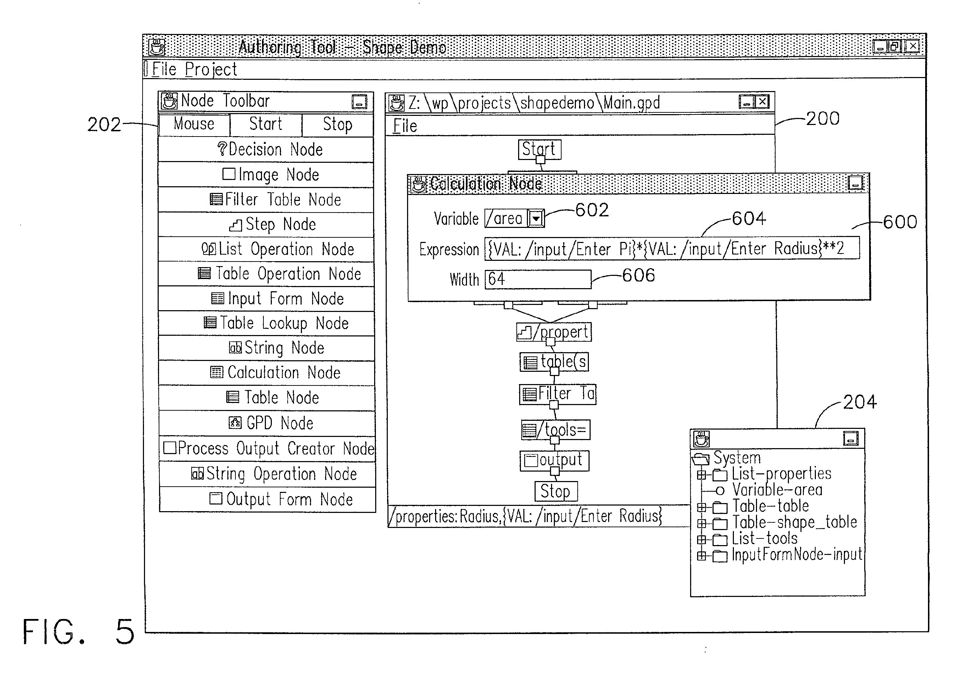

Figure 5 illustrates a node editor 600 for the calculation node. The calculation editor 600 is accessed in a manner similar to that for the filter table editor 400. The calculation editor 600 permits the author to enter appropriate equations to perform necessary computations. In the calculation editor 600, the author uses field 602 to designate the system variable or value where the result of the computation is stored. The author can either select an existing system variable from the variable window 204 or create a new system variable for entry into field 602. In field 604, the author enters the corresponding equation or expression for the calculation. The equation or expression entered in field 604 can be in terms of system variables, which have been previously been created and assigned a value, constants, etc. Finally, the author can control the visible size or width of the calculation node displayed in the visual workspace 200 in field 606. By setting the visible width of the node, the author can see some of the specific calculation being implemented by the calculation node in the visual workspace 200 without having to enter the calculation editor 600 for that node. The author is also able to set a visible width for each node that is used in the web-based application 104 in order to see details of the node without having to enter the node editor for that node. In one embodiment of the present invention, the author can also set the number of significant digits for the result of the calculation.

During the process of creating a web-based application 104, the authoring tool 102, and specifically the visual development environment, creates and uses several different files to store information about the web-based application. Files are created to store the top level data about the main application, i.e. the name and associated files, the main application that was created in the visual workspace 200, i.e. the series of interconnected nodes that form the main application, and the system variables. Other files are created to store GPD nodes, input form nodes and output form nodes, if those nodes are used in the web-based application 104. In addition, files are created to store any images, tables or any other similar type of information that is used with the web-based application 104. In a preferred embodiment of the present invention, the information or data in some of these files are written in the extensible markup language (XML), however, other similar types of languages can be used for writing to the files.

After the author has finished creating a web-based application 104 in the visual workspace 200 with the visual development environment of the authoring tool 102, the author can test the web-based application 104 with the test environment of the authoring tool 102. The test environment for the web-based application 104 is similar to debugging and simulation environments for other types of applications. The author can step through the created web-based application 104 with the test environment and see all the system values available at any time. The author can assign pre-selected values to certain system values and then monitor the response of the web-based application 104. The test environment permits the author to conduct in-depth testing of the logic and user-interface of his web-based application 104 before loading the web-based application 104 on the application server 106. The author on discovering or locating an error in the web-based application 104 can modify the web-based application 104 to correct the error. Additionally, the author can return to the test environment several times during the development of the web-based application to test the web-based application 104 as different refinements are made to the web-based application 104.

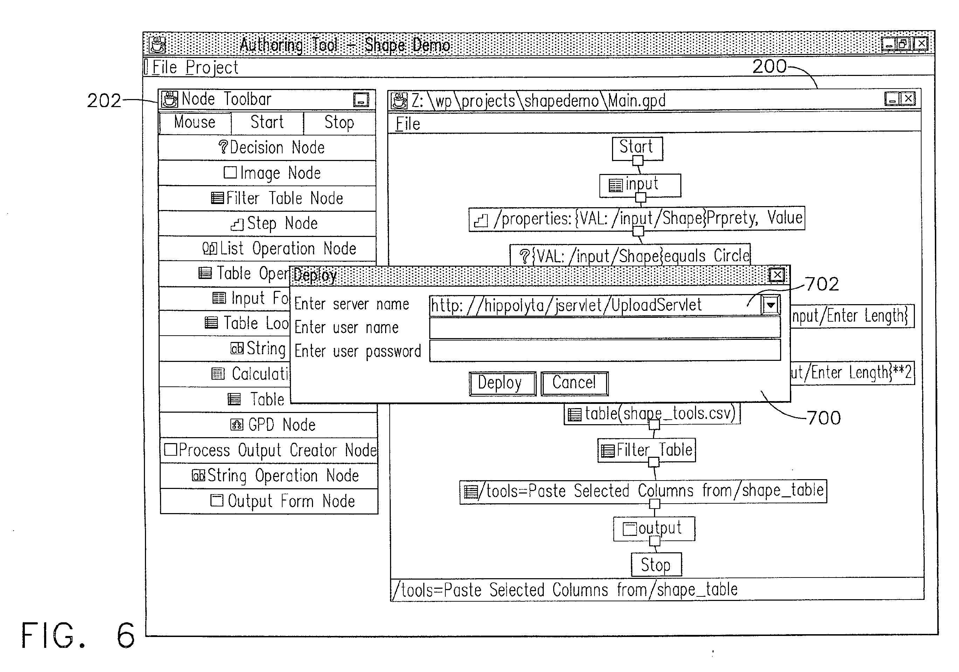

Upon completion of the development and testing of the web-based application 104, the author can then deploy the web-based application 104 to the application server 106 using the deployment utility of the authoring tool 102. Figure 6 illustrates the deployment utility of the authoring tool 102. The deployment utility includes a deployment window or box 700 where the author enters information to complete the deployment. The deployment window 700 includes a field 702 for the author to enter the particular application server 106 that will host and store the web-based application 104. One requirement for the selection of a valid application server 106 is that the application server 106 has a GPD interpreter (see detailed explanation below). In a preferred embodiment of the present invention, a drop down menu listing available application servers 106 is provided to assist the author in selecting an application server 106 for entry in field 702. The author preferably has previously indicated the application servers 106 that are to be included in the drop down menu.

Before deployment of the web-based application 104 the author has to enter his/her user name and password in the deployment window 700. Once the author elects to deploy the web-based application 104, the deployment utility verifies and authenticates the user name and password for appropriate authority before starting the actual deployment process. If authentication has occurred, the deployment utility then compresses and combines into a single file, which preferably has a ZIP format, all of the files that are associated with the web-based application 104 and transports the single file to the selected application server 106. The application server 106 has the capability to accept the deployed and uploaded web-based application 104 and display the web-based application 104 as a newly available web application. In another embodiment of the present invention, the deployment utility can combine all of the files that are associated with the web-based application 104 into a single uncompressed file and then transport the single uncompressed file to the application server 106. In still another embodiment of the present invention, the deployment utility can individually transport each of the files that are associated with the web-based application 104 in either a compressed or uncompressed format to the application server 106.

As discussed above, the application server 106 interfaces with the web server 108 and provides a shell capable of executing the web-based applications 104 developed using the authoring tool 102 through the Internet. The application server 106 includes an interpreter that converts the web-based application 104 written in the GPD architecture into executable instructions using its own version or copy of the GPD architecture with the node files and system value or variable files. The application server 106 and the interpreter can retrieve information on the web-based application 104 written in the GPD architecture from the file or files, which can be in either a compressed or uncompressed format, that are transported by the deployment utility to the application server 106 from the authoring tool 102. The interpreter of the application server 106 operates in a similar fashion to interpreters for other interpreted languages, e.g. PERL. In a preferred embodiment of the present invention, the interpreter parses each node sequentially in the web-based application 104 and converts the instructions and commands from GPD to instructions executable by the application server 106. The application server 106 can then execute the converted commands. Any information that is to be communicated to the user is transferred from the application server 106 to the web server 108, which then transfers the information to the user. In another embodiment of the present invention, the interpreter still parses each node sequentially, however, the conversion or translation of a GPD node, instruction or command can result in the generation of a script or other instruction that is to be executed on the client browser 110 instead of the application server 106. The scripts or other instructions can be in HTML, PERL, JavaScript, Java or any other similar type of web browser compatible software language. The interpreter then transfers the interpreted scripts or other instructions to the web server 108 which then transfers the interpreted scripts or other instructions to the client browser 110 for execution. The interpreter only begins interpreting web-based applications 104 upon receiving notice from the web browser 108 that the client browser 110 has selected the web-based application 104 for execution.

Other functions of the application server 106 includes session management, which manages individual instances of the web-based applications 104 and logging capabilities that track the number of users that have utilized or executed particular web-based applications 104. The web server 108 provides Internet or Intranet access to the web-based applications 104 stored on the application server 106 to end users, who interact with the web server 108 via a client browser 110. When a user starts a web-based application 104 through their client browser 110, the application server 106, on receiving notice from the web browser 108, initializes a new instance of that web-based application 104 and starts executing that web-based application 104. The application server 106 then maintains and monitors the state of each web-based application 104 per execution instance. Certain nodes in the web-based application 104, such as the input and output nodes, may request or push information to the user. This transfer of information between the application server 106 and the client browser 110 is accomplished by the web browser 108. The application server 106 can be deployed on any HTTP server that supports Common Gateway Interface (CGI), Fast CGI, Java Servlets, Active Server Pages or any other similar type of server interface technology.

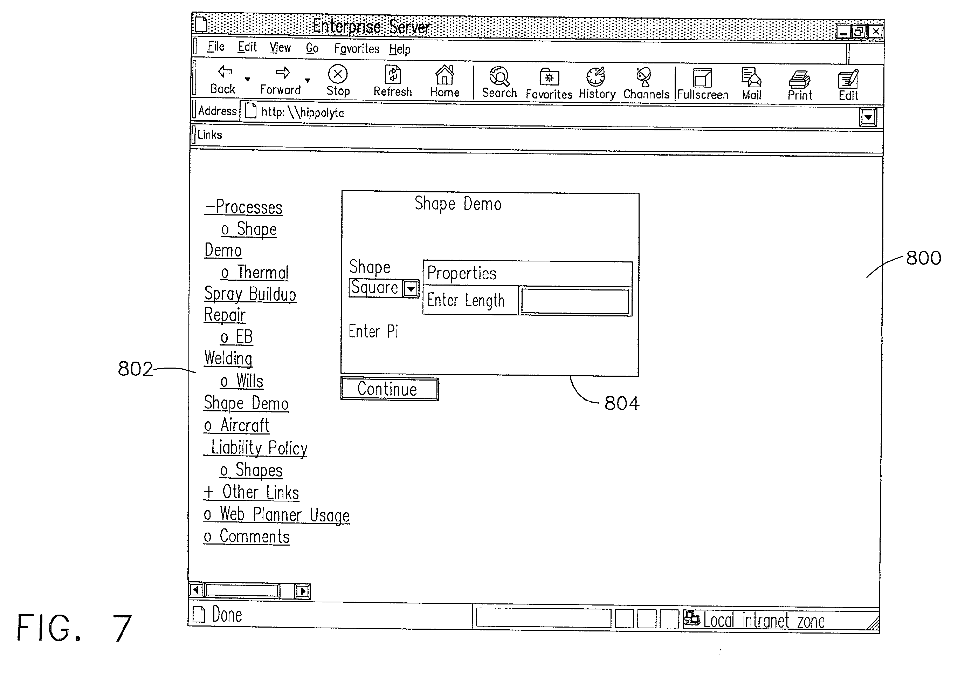

Figure 7 illustrates a web page 800 that may be presented to a user at a client browser 110. The web page 800 preferably displays only the web-based applications 104 that are stored on an individual application server 106. The displayed web-based applications 104 are displayed as a series of links with self-contained URLs. Thus, there would be a separate web page for each application server 106 that displays the web-based applications 104 stored on that particular application server 106. However, the web page 800 can include and display web-based applications from several application servers or all of the application servers 106. Referring back to Figure 7, the user would select a web-based application 104 for execution from the list of web-based applications 802. Depending on the user selection of the web-based application 104, the user can be presented with a user interface having an input window or dialog box 804 on web page 800 for the entry of information. Similarly, a user interface having output windows or boxes would also be displayed on web page 800 that included results or other information from the web-based application 104. In another embodiment of the present invention, the web-based application 104 can be executed in its own window on the client browser 110. In still another embodiment of the present invention, the links displayed on web page 800 can be individually included in other web pages, if that web page would benefit from having a link to a specific web-based application 104.

In one embodiment of the present invention, a complete copy of the authoring tool 102 or a functional portion of the authoring tool 102 can be loaded onto a computer readable medium (e.g. RAM, ROM, hard disk, CD-ROM, DVD-ROM, etc.). The storage of the authoring tool 102 on the computer readable medium can permit the author to be able to develop web-based applications 104 with the authoring tool 102 at remote locations or on a portable computer. After the author has developed the web-based applications 104, the author must then connect to an application server 106 or to a network and then deploy the web-based application 104 to the appropriate application server 106.

In one embodiment of the present invention, the authoring tool 102, the application server, 106, the web server, 108 and the client browser 110 can be executed on any type of general purpose computer having memory or storage devices (e.g. RAM, ROM, hard disk, CD-ROM, etc.), processing units (e.g. CPU, ALU, etc.) and input/output devices (e.g. monitor, keyboard, mouse, printer, etc.). The general purpose computer may also have communication devices (e.g. modems, network cards, etc.) for connecting or linking the general purpose computer to other computers.

In another embodiment of the present invention, the client browsers 110 connect to the web server 108 over an internal computer network instead of an external computer network such as the Internet. The internal network is preferably an Intranet, but the internal network can be by any type of internal network, for example, a local area network (LAN), a wide area network (WAN) or Extranet.

## Claims

1. A system to develop web applications (104) and to execute the developed web applications (104) on a computer network, the system comprising:
at least one development computer, said at least one development computer being used by an author to generate a web application (104) and said at least one development computer further comprising an authoring tool (102);
at least one storage device to store said web application (104) generated by said author;
said authoring tool (102) further comprising means for visually generating both decision logic and a visual layout of said web application (104) using a plurality of visual components and said authoring tool (102) including means for transferring said plurality of visual components of said web application (104) from said at least one development computer to said at least one storage device; and
at least one server communicating with said authoring tool (102), said at least one server comprising means for providing access to said web application (104) stored in said at least one storage device to users on a computer network and said at least one server comprising means for directly executing said plurality of visual components of said web application (104) in response to a request from a user on said computer network for access to said web application (104).

2. The system of claim 1 wherein said means for directly executing said plurality of visual components comprises an interpreter to interpret and execute each visual component of said plurality of visual components of said web application (104).

3. The system of claim 1 wherein:
said means for directly executing said plurality of visual components of said web application (104) further comprises means for initializing and executing an instance of said web application (104) for each user on said computer network requesting access to said web application (104); and
said at least one server comprises means for maintaining and monitoring a state of each instance of said web application (104) initialized and executed for a user on said computer network.

4. The system of claim 1 wherein:
said plurality of visual components comprises a plurality of nodes;
each node of said plurality of nodes accomplishing a particular function in a web application (104); and
said means for visually generating both decision logic and a visual layout of said web application (104) comprises means for interconnecting nodes of said plurality of nodes in a visual workspace (200) to generate said decision logic of said web application.

5. The system of claim 4 wherein said means for visually generating both decision logic and a visual layout of said web application (104) further comprises for each node of said plurality of nodes a corresponding means for customizing said particular function accomplished by said node to said web application.

6. The system of claim 5 wherein:
said plurality of nodes comprises a first node to accomplish receiving inputs from a user and a second node to accomplish displaying outputs to a user;
said means for customizing said first node comprises means for generating a visual layout to receive inputs from a user; and
said means for customizing said second node comprises means for generating a visual layout to display outputs to a user.

7. The system of claim 1 wherein:
said at least one server comprises at least one application server (106) and at least one web server (108) communicating with said at least one application server (106);
said at least one application server (106) comprises said means for directly executing said plurality of visual components in said at least one storage device; and said at least one web server (108) comprises said means for providing access to said web application (104).

8. The system of claim 1 wherein:
said computer network comprises one of Intranet, Extranet and Internet;
said means for providing access to said web application (104) comprises a HTTP server;
said means for visually generating both decision logic and a visual layout of said web application (104) comprises means for storing information relating to said web application (104) in a plurality of files;
said means for transferring said plurality of visual components of said web application (104) comprises means for combining said information relating to said web application (104) in said plurality of files into a single file; and
said means for transferring said plurality of visual components of said web application (104) comprises means for selecting said at least one server.
